# EUROPÄISCHE PATENTSCHRIFT

(11) **EP 0 554 557 B1**
(45) Veröffentlichungstag und Bekanntmachung des Hinweises auf die Patenterteilung: **18.03.1998**
(21) Anmeldenummer: 92121649.5
(22) Anmeldetag: 19.12.1992
(51) Int. Cl.: H02M 3/28, H02M 3/158, H02M 3/335

(54) **Verfahren zur Ansteuerung von Stromrichtern**
Method for driving power converters
Procédé de commande de convertisseurs

(30) Priorität: 03.02.1992 DE 4202988
(43) Veröffentlichungstag der Anmeldung: 11.08.1993
(73) Patentinhaber: Schwan, Ulrich, Dr.-Ing., D-88682 Salem (DE)
(72) Erfinder: Esser, Albert, Dipl.-Ing., W-5100 Aachen (DE)
(74) Vertreter: Engelhardt, Guido, Dipl.-Ing.

(56) Entgegenhaltungen:
- EP-A- 0 336 725
- EP-A- 0 392 419
- etz-Archiv, Bd. 12 (1990) H.8, Seiten 259-264; A. ESSER et al.: 'Berührungslose Energieversorgung dezentral angeordneter Antriebe in Handhabungsgeräten'

## Beschreibung

Die Erfindung bezieht sich auf ein Verfahren zur Synchronisation von Stromrichtern, die auf der Primärseite und der Sekundärseite eines zur umkehrbaren Energieübertragung vorgesehenen induktiven Elementes an dieses angeschlossen sind und durch Schaltglieder in einem konstanten Taktverhältnis geschaltet werden, wobei die Stromrichter der Primärseite von einer zentralen Schaltsignalquelle mit vorgegebener konstanter Frequenz angesteuert und die Stromrichter der Sekundärseite mit aus dem Spannungsverlauf am induktiven Element hergeleiteten Steuersignalen angesteuert werden.

Durch die US-PS 3 986 097 ist teilweise ein derartiges Verfahren zur Ansteuerung eines zur Leistungsübertragung vorgesehenen induktiven Elementes bekannt. Den auf der Primärseite sowie auf der Sekundärseite des induktiven Elementes angeordneten Stromrichtern sind hierbei eine diesen gemeinsame Signalquelle zugeordnet, durch die über jeweils mindestens eine weitere Übertragungseinrichtung die Stromrichter gleichzeitig angesteuert werden. Auf diese Weise kann zwar eine Umkehrung des Energieflusses bewerkstelligt werden, der dazu erforderliche Bauaufwand ist jedoch erheblich. Auch ist dieses Steuerungsverfahren nicht ohne weiteres bei gegeneinander verstellbaren Bauteilen des induktiven Elementes verwendbar.

Durch die EP-A 0 392 419 ist des weiteren eine Stromrichterschaltung bekannt, bei der die sekundärseitigen Schalter mittels Treiberschaltungen angesteuert werden. Durch Treiberschaltungen werden aber Signale weder in der Form noch in ihrem Zeitverlauf verändert oder beeinflußt, es wird lediglich ein zu schwaches Eingangssignal auf den erforderlichen Pegel oder Energiegehalt verstärkt. Die bekannte Anordnung liefert demnach nur ein indirekt gesteuertes, nicht ein hergeleitetes Signal.

Dem Aufsatz "berührungslose Energieversorgung dezentral angeordneter Antriebe in Handhabungsgeräten" von Albert Eßer und Thomas Kalker (etz-Archiv Bd. 12 (1990) H. 8 S259-264) ist ferner eine kabel- und kontaktlose Energieübertragung mittels Drehtransformatoren zu entnehmen, wobei eine vergleichende Betrachtung von hart- und resonanzschaltenden Gleichspannungsumsetzern durchgeführt und von bidirektionaler Energieübertragung gesprochen wird, die sich ergibt, wenn man die dort gezeigten Stromrichteranordnungen synchron betreibt. Ein Hinweis auf die Steuerung eines synchronen Betriebsmodus ist dieser Veröffentlichung aber nicht zu entnehmen.

Aufgabe der Erfindung ist es daher, das Verfahren zur Synchronisation von Stromrichtern der eingangs genannten Gattung in der Weise zu gestalten, daß die Stromrichter, ohne daß diese unmittelbar miteinander zu verbinden sind, dennoch in Abhängigkeit voneinander geschaltet werden können. Der dazu notwendige Bauaufwand soll gering gehalten werden, auch soll eine vielseitige Anwendbarkeit des Steuerungsverfahrens, und zwar auch bei gegeneinander verstellbaren Bauteilen des induktiven Elementes, ohne weiteres bei stets hoher Betriebssicherheit möglich sein.

Gemäß der Erfindung wird dies dadurch erreicht, daß die aus dem Spannungsverlauf am induktiven Element hergeleiteten Steuersignale auf dessen Primär- oder Sekundärseite, vorzugsweise auf der Sekundärseite, von diesem abgenommen werden und die Stromrichter der Sekundärseite mit Hilfe einer mit einem Zeitschaltglied versehenen Steuerschaltung so rechtzeitig unter Berücksichtigung der vorgegebenen konstanten Frequenz vor einem Schaltvorgang der Stromrichter der Primärseite ausgeschaltet werden, daß der Strom auf der Sekundärseite zum Zeitpunkt des Schaltvorganges der Stromrichter der Primärseite auf Null zurückgeführt ist.

Zweckmäßig ist es hierbei, wenn das Zeitschaltglied der Steuerschaltung jeweils durch die Änderung der Spannungspolarität der Stromrichter der Primärseite für einen folgenden Schaltvorgang gestartet wird.

Angezeigt ist es des weiteren, die Stromrichter der Sekundärseite mittels der Steuerschaltung unmittelbar nach einer Änderung der Spannungspolarität der Stromrichter der Primärseite zu aktivieren, wobei die Stromrichter der Sekundärseite zur Kompensation der Schaltverzögerung vor einer Änderung der Spannungspolarität der Stromrichter der Primärseite, vorzugsweise mit Hilfe eines weiteren in die Steuerschaltung integrierten Zeitschaltgliedes, aktiviert werden können.

Ferner kann die Steuerschaltung mit einem Quarzoszillator versehen werden, durch den diese stabilisiert läuft, so daß nicht mehr jeder Umschaltvorgang zur Synchronisation herangezogen werden muß.

Werden gemäß der Erfindung die auf der Primärseite des induktiven Elementes angeordneten Stromrichter mit konstanter Frequenz angesteuert und werden den Stromrichtern der Sekundärseite Steuersignale, die vorzugsweise aus dem Spannungsverlauf am induktiven Element hergeleitet sind, zugeführt, so ist es bei einer Änderung der Potentialverhältnisse auf sehr einfache Weise möglich, eine Umkehrung des Energieflusses selbsttätig zu bewerkstelligen. Obwohl die Stromrichter der beiden Seiten nicht unmittelbar miteinander in Verbindung stehen, werden diese aber dennoch in Abhängigkeit von einander geschaltet, so daß die Enegieflußrichtung sofort umzukehren ist. Der dazu erforderliche Schaltungsaufwand ist äußerst gering, da gemeinsame Übertrager nicht mehr erforderlich sind. Auch ist das erfindungsgemäße Verfahren bei allen zur Leistungs- und Datenübertragung vorgesehenen induktiven Elementen anwendbar, und zwar auch bei induktiven Elementen, deren Bauteile gegeneinander verstellt, beispielsweise verdreht werden, ohne daß es dazu eines zusätzlichen Schaltungsaufwandes bedarf. Durch die vorgesehene Verfahrensweise wird somit eine selbstsynchronisierende Schaltung der beiderseits eines induktiven Elementes angeordneten an dieses angeschlossenen Stromrichter erzeugt.

In der Zeichnung sind ein Schaltungsaufbau, mittels dem das erfindungsgemäße Verfahren zur Ansteuerung von Stromrichtern zu bewerkstelligen ist, sowie Schaltdiagramme, die nachfolgend im einzelnen erläutert sind, dargestellt. Hierbei zeigen:
- Figur 1: einen Schaltungsaufbau in einem Blockschaltbild,
- Figur 2: die einzelnen bei dem Schaltungsaufbau nach Figur 1 auftretenden Schaltvorgänge in einem Zeitdiagramm,
- Figur 3: den Schaltungsaufbau der bei der Schaltung nach Figur 1 vorgesehenen Steuerschaltung zur Auswertung des Spannungsverlaufs am induktiven Element, und
- Figur 4: die Zeitverläufe von Spannung und Strom zum Zeitpunkt eines Schaltvorganges.

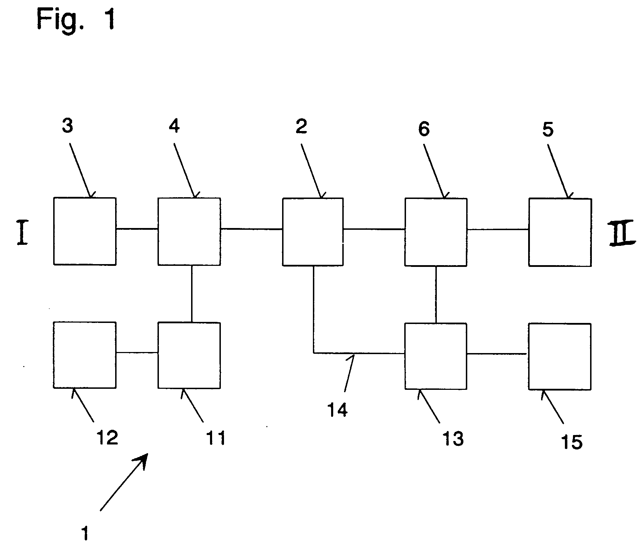

Die in Figur 1 in Form eines Blockschaltbildes dargestellte und mit 1 bezeichnete Schaltung besteht aus einem induktiven Element 2, beispielsweise einem Transformator, zur Übertragung von Leistung und/oder Daten in beiden Flußrichtungen, und zwar von einer Energiequelle 3 zu einer Energiesenke 5 und bei einer Änderung der Potentialverhältnisse von der als Energiequelle wirksamen Energiesenke 5 zu der nunmehr als Energiesenke wirksamen Energiequelle 3. Sowohl auf der Primärseite I als auch auf der Sekundärseite II des induktiven Elementes 2 sind an dieses ein oder mehrere Stromrichter 4 bzw. 6 angeschlossen, die in besonderer Weise angesteuert werden.

Die Stromrichter 4 der Primärseite I, die ebenfalls mit der Energiequelle 3 verbunden sind, werden durch eine Schaltsignalquelle 11 kontrolliert, die mit einer konstanten Frequenz angesteuert wird. Diese Frequenz wird durch einen Taktgenerator 12 erzeugt, der vorzugsweise einen Quarzoszillator enthält.

Auch die Stromricher 6 der Sekundärseite II werden durch eine Steuerschaltung 13, die unabhängig von der den Stromrichtern 4 zugeordneten Schaltsignalquelle 11 arbeitet, kontrolliert. Die Steuersignale der Steuerschaltung 13 werden aus dem Spannungsverlauf am induktiven Element 2 hergeleitet und von diesem über eine Signalleitung 14 der Steuerschaltung 13 zugeführt. Des weiteren ist der Steuerschaltung 3 ein Quarzoszillator 15 zugeordnet, durch den diese stabilisiert läuft. Es muß somit nicht mehr jeder Umschaltvorgang der Spannung auf der Primärseite I zur Synchronisation herangezogen werden, vielmehr kann die Synchronisation zwischen der Schaltsignalquelle 11 der Primärseite I und der Steuerschaltung 13 der Sekundärseite II, beispielsweise nur bei jeder hundertsten Umschaltung vorgenommen werden.

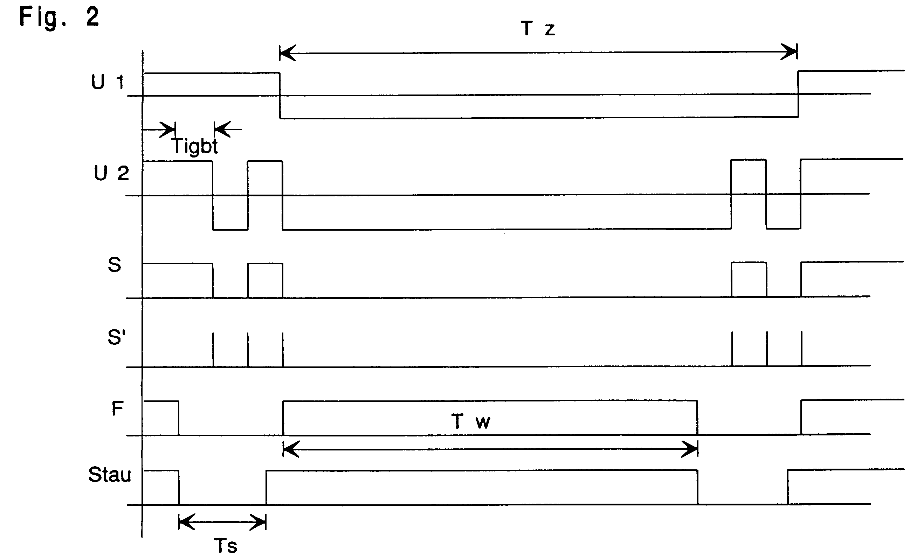

Die Stromrichter 4 der Primärseite I werden, wie dies dem Zeitdiagramm gemäß Figur 2 zu entnehmen ist, mittels der Schaltsignalquelle 11 mit einem stabilden und zeitlich konstanten Taktraster angesteuert. Jeweils nach Ablauf der Zeitdauer T_{z} werden die Stromrichter 4 umgesteuert, das heißt, die Spannung wird umgekehrt. Es ergibt sich somit der Verlauf der Spannung U 1 auf der Primärseite I des induktiven Elementes 2.

Die Ansteuerung wird in der Weise bewerkstelligt, daß bei bekannter Zykluszeit T_{z} die Stromrichter 6 der Sekundärseite II eine bestimmte Zeit vorher abgeschaltet werden. Dies zeigt der Verlauf des Freigabesignales F nach Ablauf der Wartezeit T_{w} (mit T_{w} < T_{z}).

Die Stromrichter 6 weisen eine gewisse Verzögerungszeit Tigbt auf. Deshalb verändert sich die Sekundärspannung zunächst nicht. Nach Ablauf der Verzögerungszeit Tigbt sperren die Stromrichter 6 und der Strom wird abkommentiert, d. h., er geht auf Null. Solange der Strom abkommentiert ist, ändert sich das Vorzeichen der Spannung U₂. Sobald der Strom zu Null geworden ist, ist der Verlauf der Spannung U₂ gleich dem der Spannung U₁, da das induktive Element 2 stromlos ist. Ab diesem Zeitpunkt ist also die Veränderung der Spannung U₁ auf der Sekundärseite II erfaßbar. Sobald nun die Spannung U₁ und damit auch die Spannung U₂ durch die Stromrichter 4 der Primärseite I eingeschaltet wird, wird auf der Sekundärseite II das Freigabesignal F für die Wartezeit T_{w} freigegeben und damit auch die Stromrichter 6 der Sekundärseite II.

Das Freigabesignal F wird in der Weise erzeugt, daß Störungen keinen Einfluß haben können. Dazu wird nach Ablauf der Wartezeit T_{w} eine weitere Ausblendzeit Tₛ gewartet, bis die Kommentierung beendet ist, so daß der Verlauf der Spannung U₂ sicher ausgewertet werden kann. Im Zeitdiagramm nach Figur2 ist dieses durch das Signal Stau verdeutlicht.

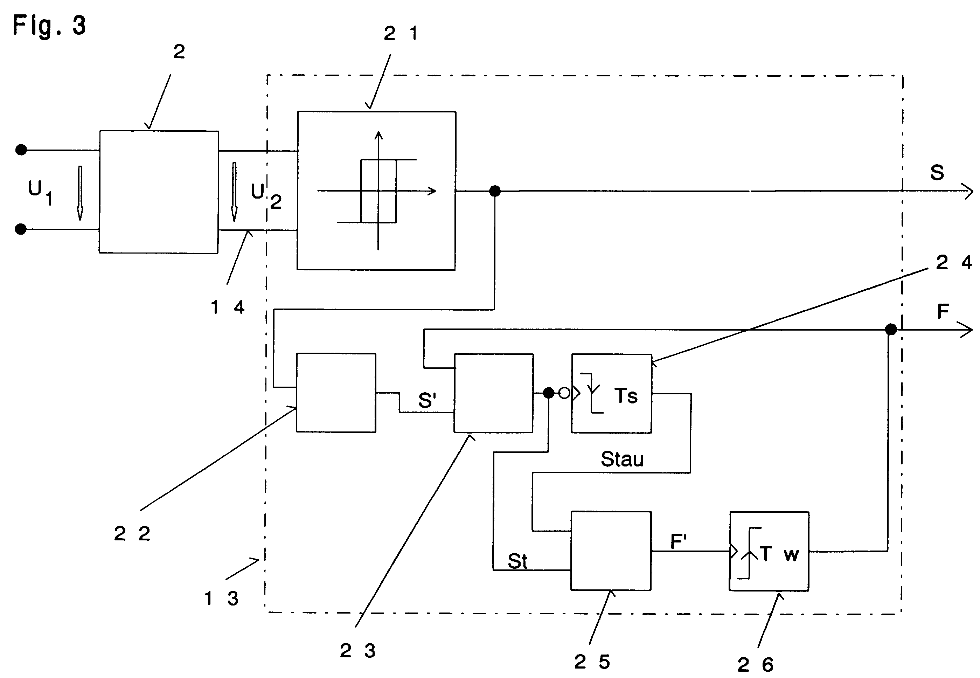

Die Auswertung des Verlaufes der SpannungU₂ kann auf unterschiedliche Weise vorgenommen werden. Bei dem in Figur 3 gezeigten Ausführungsbeispiel der Steuerschaltung 13 wird von einem Schwellwertschalter 21 (Schmitt-Trigger) ein Schaltsignal S, das den Verlauf der Spannung U₂ aber nicht den Pegel wiedergibt, erzeugt. Das Schaltsignal S wird mittels eines Differenzierers 22 differenziert, es ergibt sich der Verlauf des Signales S'. Mittels des Signals S' wird des weiteren über ein Verknüpfungsglied 23 jeweils ein Hilfssignal St erzeugt. Das Hilfssignal St kann jedoch erst nach Ablauf eines Zeitgliedes 24 mit der Ausblendzeit Tₛ über ein Hilfssignal F' erneut das Zeitglied 24 mit der Wartezeit T_{w} starten und damit das Freigabesignal F erzeugen. Die Verriegelung des Hilfssignales St durch das Signal Stau erfolgt mit der Rücknahme des Freigabesignales F, die immer vor dem Erscheinen der Pulse des Signals S' erfolgt, da die Stromrichter 6 eine gewisse Verzögerungszeit aufweisen.

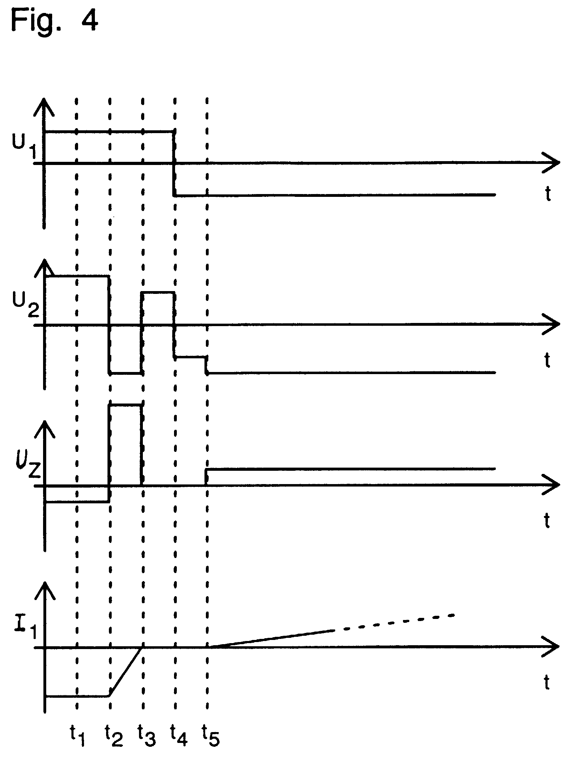

In den in Figur 4 dargestellten Zeitverläufen bedeuten:
- U₁: Verlauf der Spannung am induktiven Element 2 auf der Primärseite I,
- U₂ :: Verlauf der Spannung am induktiven Element 2 auf der Sekundärseite II,
- U_{z} :: Verlauf der Spannung über dem induktiven Element 2,
- I₁ :: Verlauf des Stromes auf der Primärseite I.
- t₁ :: Zu diesem Zeitpunkt wird das Freigabesignal F zurückgenommen, die Wartezeit T_{w} ist abgelaufen.
- t₂ :: Nach der Verzögerungszeit Tigbt der Stromrichter 6 der Sekundärseite II sperren diese. Dadurch wird der Strom abkommentiert, der Verlauf der Sekundärspannung verändert sich entsprechend.
- t₃ :: Jetzt ist der Strom Null geworden. U₂ beträgt nun U₁, über dem induktiven Element 2 fällt keine Spannung mehr ab.
- t₄ :: Auf der Primärseite I werden die Stromrichter 4 umgesteuert. Der Verlauf der Spannung auf der Sekundärseite II entspricht dem der Primärseite I, das Freigabesignal F wird wieder gestartet.
- t₅ :: Nach der Verzögerungszeit Tight durch die Stromrichter 6 schalten diese und der Strom beginnt wieder zu fließen, entsprechend fällt wieder eine Spannung am induktiven Element 2 ab.

Durch die mit dem Schaltungsaufbau gemäß Figur 1 zu bewerkstelligende Verfahrensweise ist es somit möglich, die Stromrichter 4 und 6 derart anzusteuern, daß diese selbsttätig synchronisiert werden, wobei die Schaltsignale durch die Auswertung der an diesen und dem induktiven Element 2 anliegenden Spannungen und deren Verläufe erzeugt werden. Am Wechselspannungseingang der Stromrichter 6 der Sekundärseite II wird dabei das Umschwingen der Wechselspannung hervorgerufen durch die Stromrichter 4 der Primärseite I erkannt. Die Wechselspannungsseite der Stromrichter 6 wird dazu zum Zeitpunkt des Umschaltens der Stromrichter 4 hochohmig geschaltet, damit die Wechselspannung der Stromrichter 6 nicht mehr durch sie selbst neu geprägt wird. Das hochohmige Schalten der Stromrichter 6 wird durch die Steuerschaltung 13 kontrolliert, die sich wiederum, über den Verlauf der Spannung am induktiven Element 2, mit der Schaltsignalquelle 11 der Stromrichter 4 selbst synchronisiert.

### Zusammenstellung der Bezugsziffern und Bezeichnungen

- 1: Schaltungsaufbau
- 2: induktives Element
- 3: Energiequelle
- 4: Stromrichter
- 5: Energiequelle
- 6: Stromrichter
- 11: Schaltsignalquelle
- 12: Taktgenerator
- 13: Steuerschaltung
- 14: Signalleitung
- 15: Quarzoszillator
- 21: Schwellwertschalter
- 22: Differenzierer
- 23: Verknüpfungsglied
- 24: Zeitglied
- 25: Verknüpfungsglied
- 26: Zeitglied
- I: Primärseite
- II: Sekundärseite
- U₁: Spannung
- U₂: Spannung
- S: Schaltsignal
- S': Signal
- Stau: Signal
- St: Hilfssignal
- F: Freigabesignal
- T_{w}: Wartezeit
- T_{z}: Zykluszeit
- Tₛ: Ausblendzeit
- Tigbt: Verzögerungszeit
- F': Hilfssignal

## Patentansprüche

1. Verfahren zur Synchronisation von Stromrichtern (4, 6), die auf der Primärseite (I) und der Sekundärseite (II) eines zur umkehrbaren Energieübertragung vorgesehenen induktiven Elementes (2) an dieses angeschlossen sind und durch Schaltglieder (11, 12, 13) in einem konstanten Taktverhältnis geschaltet werden, wobei die Stromrichter (4) der Primärseite (I) von einer zentralen Schaltsignalquelle (11) mit vorgegebener konstanter Frequenz angesteuert und die Stromrichter (6) der Sekundärseite (II) mit aus dem Spannungsverlauf am induktiven Element (2) hergeleiteten Steuersignalen angesteuert werden,
**dadurch gekennzeichnet**,
daß die aus dem Spannungsverlauf am induktiven Element (2) hergeleiteten Steuersignale auf dessen Primär- oder Sekundärseite (I bzw. II), vorzugsweise auf der Sekundärseite (II), von diesem abgenommen werden und die Stromrichter (6) der Sekundärseite (II) mit Hilfe einer mit einem Zeitschaltglied (24) versehenen Steuerschaltung (13) so rechtzeitig unter Berücksichtigung der vorgegebenen konstanten Frequenz vor einem Schaltvorgang der Stromrichter (4) der Primärseite (I) ausgeschaltet werden, daß der Strom auf der Sekundärseite (II) zum Zeitpunkt des Schaltvorgan es der Stromrichter (4) der Primärseite (I) auf Null zurückgeführt ist.

2. Verfahren nach Anspruch 1,
**dadurch gekennzeichnet,**
daß das Zeitschaltglied (24) der Steuerschaltung (13) jeweils durch die Änderung der Spannungspolarität der Stromrichter (4) der Primärseite (I) für einen folgenden Schaltvorgang gestartet wird.

3. Verfahren nach Anspruch 1 oder 2,
**dadurch gekennzeichnet,**
daß die Stromrichter (6) der Sekundärseite (II) mittels der Steuerschaltung (13) unmittelbar nach einer Änderung der Spannungspolarität der Stromrichter (4) der Primärseite (I) aktiviert werden.

4. Verfahren nach Anspruch 3,
**dadurch gekennzeichnet,**
daß die Stromrichter (6) der Sekundärseite (II) zur Kompensation der Schaltverzögerung vor einer Änderung der Spannungspolarität der Stromrichter (4) der Primärseite (I), vorzugsweise mit Hilfe eines weiteren in die Steuerschaltung (13) integrierten Zeitschaltgliedes (26), aktiviert werden.

5. Verfahren nach einem oder mehreren der Ansprüche 1 bis 4,
**dadurch gekennzeichnet,**
daß die Steuerschaltung (13) mit einem Quarzoszillator (15) versehen ist.

## Claims

1. A process for synchronising power converters (4, 6) connected on the primary side (I) and the secondary side (II) of an inductive element (2) provided for reversible power transmission and switched in a constant clock ratio, in which the power converters (4) on the primary side (I) are driven by a central switching signal source (11) with a specified constant frequency and the power converters (6) on the secondary side (II) are driven by control signals derived from the voltage waveshape on the inductive element (2),
**characterised in that**,
the control signals derived from the from the voltage waveshape on the inductive element (2) are picked off its primary or secondary side (I or II), however preferably from its secondary side (II), and the power converters (6) on the secondary side (II) are switched off by means of a control circuit (13) equipped with a timer switch (24), with this switch-off being correctly timed with regard to the specified constant frequency and occurring prior to a switching operation of the power converters (4) on the primary side (I) in such a way that the current on the secondary side (II) is restored to zero at the moment when the switching operation of the power converters (4) on the primary side (I) takes place.

2. The process in accordance with claim 1,
**characterised in that**,
the timer switch (24) of the control circuit (13) is started by the change in polarity of the voltage of the power converters (4) on the primary side (I) for a subsequent switching operation.

3. The process in accordance with claim 1 or 2,
**characterised in that**,
the power converters (6) on the secondary side (II) are activated by the control circuit (13) directly following a change in polarity of the voltage of the power converters (4) on the primary side (I).

4. The process in accordance with claim 3,
**characterised in that**,
in order to compensate for the switching delay, the power converters (6) on the secondary side (II) are activated prior to a change of polarity of the voltage of the power converters (4) on the primary side (I), preferably by means of another timer switch (26) integrated into the control circuit (13).

5. The process in accordance with one or more of claims 1 to 4,
**characterised in that**,
the control circuit (13) is provided with a quartz oscillator (15).

## Revendications

1. Procédé de synchronisation de redresseurs (4, 6) branchés sur le côté primaire (I) et sur le côté secondaire (Il) d'un élément inductif (2) prévu pour le transfert réversible d'énergie et actionnés par des organes de commande (11, 12, 13) à un cycle constant, les redresseurs (4) du côté primaire (I) étant actionnés par une source de signaux de commande centrale (11) avec une fréquence constante donnée, et les redresseurs (6) du côté secondaire (Il) avec des signaux de commande déduits de la courbe de tension sur l'élément inductif (2).
caractérisé en ce que
les signaux de commande déduits de la courbe de tension sur l'élément inductif (2) sont prélevés sur son côté primaire (I) ou secondaire (Il), de préférence sur son côté secondaire (Il) et que, moyennant une commande (13) munie d'une minuterie (24) et compte tenu de la fréquence constante donnée, les redresseurs (6) du côté secondaire (Il) sont désactivés à temps avant un actionnement des redresseurs (4) du côté primaire (I), de sorte que le courant sur le côté secondaire (Il) soit ramené à zéro au moment de l'actionnement des redresseurs (4) du côté primaire (I).

2. Procédé d'après la revendication 1,
caractérisé en ce que
pour une activation consécutive, la minuterie (24) de la commande (13) est démarrée respectivement par un changement de la polarité de tension des redresseurs (4) du côté primaire (I).

3. Procédé d'après la revendication 1 ou 2,
caractérisé en ce que
moyennant la commande (13), les redresseurs (6) du côté secondaire (Il) sont activés directement après le changement de la polarité de tension des redresseurs (4) du côté primaire (I).

4. Procédé d'après la revendication 3,
caractérisé en ce que
pour compenser le délai d'actionnement avant un changement de la polarité de tension des redresseurs (4) du côté primaire (I), les redresseurs (6) du côté secondaire (Il) sont activés de préférence au moyen d'une autre minuterie (26) intégrée dans la commande (13).

5. Procédé d'après une ou plusieurs des revendications 1 à 4,
caractérisé en ce que
la commande (13) est munie d'un oscillateur piézo-électrique.
